# EUROPEAN PATENT APPLICATION

(11) **EP 3 425 874 A1**
(43) Date of publication of application: **09.01.2019**
(21) Application number: 17305851.2
(22) Date of filing: 03.07.2017
(51) Int. Cl.: H04L 29/08, H04L 29/06, H04L 9/32, H04L 9/08, G06F 21/60

(54) **TRANSFER OF CONTENT IN A PEER-TO-PEER NETWORK**

(71) Applicant: Thomson Licensing, 92130 Issy-les-Moulineaux (FR)
(72) Inventor: NEUMANN, Christoph, 35576 Cesson-Sévigné (FR); CHANDRASHEKAR, Jaideep, Los Altos, 94022 (US); LE MERRER, Erwan, 35576 Cesson-Sévigné (FR)
(74) Representative: Vidon Brevets & Stratégie

(57) **Abstract**

Method of monitoring a transfer of a block of content from a first device to a second device in a peer-to-peer network, the method comprising at a monitoring device performing a smart contract in the peer-to-peer network:
- receiving (34) a reusable proof of work related to a transfer of the block of content from the first device and from the second device;
- receiving (40) a proof of possession of the block of content from the second device; and
- logging (42) a result of the data transfer on a blockchain for transfer of blocks of content.

## Description

### TECHNICAL FIELD

The present disclosure generally relates to the field of network communication, more particularly in a peer-to-peer network.

More particularly, the invention deals with the transfer of content between devices of a peer-to-peer network.

Thus, the invention concerns a method of monitoring the transfer of a block of content from a first device to a second device in a peer-to-peer network, and a corresponding monitoring device. It further concerns a computer program implementing the transfer method of the invention.

### BACKGROUND

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

It is known to use a peer-to-peer (or P2P) mode for content distribution, such as Video-on-Demand (or VOD) for instance.

One means here by "content distribution" a service allowing a client (i.e. a peer) to receive content(s) that are initially provided by a service provider through at least one content serving means accessible through a communication network.

Moreover, one means here by "content" any type of set of data that can be distributed, notably in a P2P mode, and notably files of information data, videos, chunks of video, pictures to share, html files, audio files and software updates, and more generally any type of file.

More, one means here by "peer" a communication equipment capable of exchanging data or symbols (i.e. blocks or packets or chunks of data) with other peers or network equipment, notably in a P2P mode, through communications, possibly of the wireless type.

So, a peer may be a computer, a laptop, a smartphone, a fixed or mobile (or cellular) telephone, a personal digital assistant (or PDA), provided that it comprises a communication interface (or any equivalent communication means), possibly of the wireless type, or a base station that is assisting opportunistic content delivery in an area (such as a content "booth" (or a "throwbox")), or else a content receiver, such as a home gateway (connected through DSL, fiber or cable) or a set-top box (STB) that is located in home premises.

A well-known communication architecture using P2P is the so called centralized P2P architecture (such as BitTorrent, for instance). It comprises at least one central server in charge of managing unicast communications (or connections) between peers to allow contents to be exchanged therebetween (and only therebetween).

In this context, it is important to log which files or portions of files have been transferred from one peer to another, i.e. to create audit logs that track where copies of a particular file are located.

For many applications such as security audits, billing, copyrighted content, distribution of critical software, etc., it is important that these logs are non-repudiable, i.e. it should not be possible for the peers that received or sent the file, or portion of the file, to deny that the file, or portion of the file, has been actually transferred.

Thus, there is a big need, in a peer-to-peer network, to publicly track, log and verify which files, or some portions of files, have been transferred from one peer to another.

More precisely, it would be desirable to have a mechanism that allows two peers to initiate a logged file exchange protocol, the log being non-repudiable. Such protocol would ensure when two parties exchange data over a network, that neither one nor the other has an interest in denying having participated in this communication.

It is also desirable that such protocol does not include a trusted third party such as a dedicated authority server, because such solution may generate common scalability, availability and lockup issues.

### SUMMARY OF THE DISCLOSURE

The present disclosure proposes a solution for improving the situation.

Accordingly, the present disclosure provides a method of monitoring a transfer of a block of content from a first device to a second device in a peer-to-peer network, the method comprising at a monitoring device performing a smart contract in the peer-to-peer network:
- receiving a reusable proof of work related to a transfer of the block of content from the first device and from the second device;
- receiving a proof of possession of the block of content from the second device; and
- logging a result of the data transfer on a blockchain for transfer of blocks of content.

Here, it is assumed that the files exchanged in the peer-to-peer network are cut into blocks, wherein a block is the unit of transfer. Thus, file exchanges are logged at the level of block granularity and the log provides a proof that a block has actually been transferred.

According to the present disclosure, the non-repudiable log is implemented using a blockchain technology, that records individual and valid transactions made on the peer-to-peer network through contracts.

Advantageously, the method includes, in case the possession is successfully proven, returning the reusable proofs of work to the first device and the second device.

Whereas, in case the possession is not proven, the method includes keeping the reusable proofs of work.

Preferably, the blockchain is maintained by the monitoring device and by the first and second devices.

According to an embodiment, the method includes receiving a proof of possession of the block of content from the first device.

Advantageously, the block of content is transferred with metadata derived from the block of content using a secret key of an owner of the block of content.

Preferably, the smart contract possesses a public key of the owner.

Advantageously, the method comprises signing the smart contract by the first and second devices.

According to an embodiment, the method comprises sending an incentive to the first device in case the possession of the block of content by the second device is successfully proven.

The present disclosure also provides a monitoring device for monitoring a transfer of a block of content from a first device to a second device in a peer-to-peer network, the monitoring device being configured to perform a smart contract, and comprising
- a receiving module configured to:
   - receive a reusable proof of work related to a transfer of the block of content from the first device and from the second device;
   - receive a proof of possession of the block of content from the second device; and
- a logging module configured to log a result of the data transfer on a blockchain for transfer of blocks of content.

Advantageously, the monitoring device comprises a transmitting module, configured, in case the possession is successfully proven, to return the reusable proofs of work to the first device and the second device;

Preferably, the transmitting module is configured to transmit the block of content with metadata derived from a secret key of an owner of the block of content.

Advantageously, the receiving module is configured to receive a proof of possession of the block of content from the first device.

According to an embodiment, the transmitting module is configured to send an incentive to the first device in case the possession of the block of content by the second device is successfully proven.

The method according to the disclosure may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may include a storage medium such as a floppy disk, a CD-ROM, a hard disk drive, a magnetic tape device or a solid state memory device and the like.

The disclosure thus provides a computer-readable program including computer-executable instructions to enable a computer to perform the monitoring method of the invention.

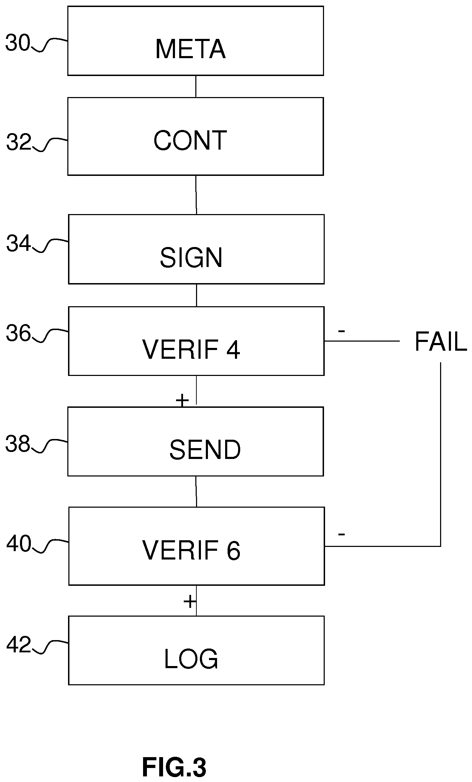

The diagram of figure 3 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a peer-to-peer network according to an embodiment of the present disclosure;
- Figure 2 is a schematic view illustrating the monitoring device, according to an embodiment of the disclosure; and
- Figure 3 is a flowchart showing the steps of the monitoring method according to an embodiment of the present disclosure.

### DETAILED DESCRIPTION OF PREFERRED EMBODIMENTS

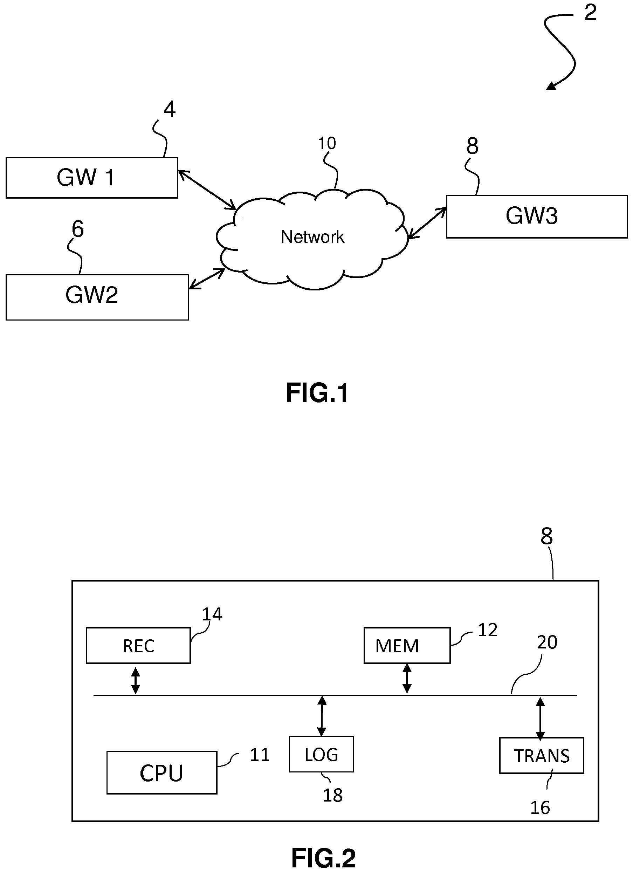

Figure 1 illustrates an exemplary peer-to-peer network 2 in which the peers are gateways. Of course, the peers may be any other communicating devices, such as set-top boxes, smart phones, laptops, tablets, etc.

The peers run a peer-to-peer file exchange protocol such as BitTorrent and download portions of files from other peers. As an example, the peers provide a video on demand service and the exchanged files are video files.

It is assumed that the files are split into many blocks of content, wherein a block of content is considered as the unit of transfer.

In the represented embodiment in Figure 1, the peer-to-peer network 2 comprises at least three devices 4, 6, 8 connected through a network 10, such as the Internet, for example.

The peers also run a blockchain protocol, capable of implementing smart contracts, such as Ethereum.

It is considered, according to the present embodiment, that a device, for example the third device 8, monitors a transfer of a block of content, such as a video content, from the first device 4 to the second device 6. Thus, the third device 8 is called monitoring device in the following description.

It is important to note that any of the devices of the peer-to-peer network 2 may be a monitoring device for monitoring the transfer of a block of content between any two other devices of the peer-to-peer network 2.

In general, the owner of the content is not a peer of the network but some third party such as an Internet Service Provider or a content provider, such as Universal Pictures. The owner is responsible for generating metadata of the block of content, typically when the block of content is prepared for a peer-to-peer transfer.

Once the content has been prepared for the peer-to-peer transfer, i.e. it has been cut into blocks and associated metadata has been generated, the blocks of content and metadata are stored on at least one peer such that the peer-to-peer transfers can start.

Figure 2 is a block diagram of an exemplary embodiment of the monitoring device 8 implementing the monitoring method of the present disclosure.

Advantageously, the monitoring device 8 includes one or more processors 11 and a memory 12.

The monitoring device 8 comprises:
- a receiving module 14 configured to:
   - receive a reusable proof of work related to a transfer of the block of content from the first device 4 and from the second device 6;
   - receive a proof of possession of the block of content the first device 4 and from the second device 6;
- a transmitting module 16, configured, in case the possession is successfully proven, to return the reusable proofs of work to the first device 4 and the second device 6; and
- a logging module 18 configured to log a result of the data transfer on a blockchain for transfer of blocks of content.

According to the represented embodiment, a bus 20 provides a communication path between various elements of the monitoring device 8. Other point-to-point interconnection options (e.g. non-bus architecture) are also feasible.

Figure 3 illustrates a monitoring method according to a preferred embodiment of the present disclosure.

At a step 30, the owner of an original video file issues this file in the peer-to-peer network 2. The owner associates a set of metadata with each block of the original file and distributes the metadata along with the block. The metadata are preferably derived from the blocks using a secret, i.e. a private, key of the owner and are advantageously in the form of a set of signatures. The identifier of the block is advantageously included in the signature. This identifier can be a number or the hash of the block. In the last case where the identifier is the hash of the block, it does not need to be explicitly included in the signature.

At step 32, the owner creates a smart contract for the original file or a smart contract for each block of the original file and issues the contract on a blockchain for transfer of blocks of content. The smart contract preferably possesses the corresponding public key of the owner.

It is assumed that at least the monitoring device 8 has a copy of the smart contract and the public key of the owner.

In the following description, it is assumed that a block of content of the file issued by the owner will be sent from the first device 4 to the second device 6. This takes place after the second device 6, which is looking for this block of content, has discovered, for instance using the trackers of the BitTorrent protocol, that it could download this block from the first device 4.

Before the first and second devices 4, 6 exchange the block of content, they both send, at step 34, crypto tokens, i.e. reusable proofs of works, for example ethers according to the Ethereum protocol, to the monitoring device 8 maintaining a contract account in order to sign the smart contract.

At step 36, the monitoring device 8, performing the smart contract, verifies the proof of possession for the first device 4. The verification protocol comprises sending a challenge to the first device 4. Then, the first device 4 returns a proof P that can be validated by the smart contract using the challenge and the public key of the owner 8. The challenge is preferably random. It can be based on the previous block hash in the blockchain.

According to a first implementation of the verification protocol described in section 3.3 of the paper of Wang et al. :"Enabling public auditability and data dynamics for storage security in cloud computing", 14th European Symposium on Research in Computer Security, ESORICS'09 , the challenge is a set of identifiers of randomly selected blocks of the file and the proof P is the set of randomly selected blocks in the challenge along with the signatures that have been provided by the owner. The monitoring device verifies the proof P for example by checking if they are signed by the owner, if the returned block is signed, if the block has the correct id.

This first implementation provides a probabilistic assurance that the first device 4 has the file. However, it requires a very high communication overhead as the first device 4 must transfer the random blocks.

According to a second implementation of the verification protocol described in section 3.4 of the paper of Wang et al.:"Enabling public auditability and data dynamics for storage security in cloud computing", 14th European Symposium on Research in Computer Security, ESORICS'09, at step 30, the owner also provides the signature of the root of a Merkle hash tree. The leaf nodes of the Merkle Hash tree are hashes of each block.

Then, at step 36, the challenge, generated by the monitoring device8, is the identifier of a set of blocks hash tree along with a set of random elements, i.e. one element per block.

Then, the first device calculates two derived values:
i) a value that depends on the actual data of the selected blocks and the random elements; and
ii) a value that depends on the signatures of the selected blocks and the random elements.

The monitoring device 8 can then check the proof using the root of the Merkle hash tree.

This second implementation removes the constraint of sending the blocks from the first device 4 to the monitoring device 8.

If the first device 4 cannot prove possession, the verification protocol fails and the crypto tokens received at step 34 are sent back to the first device 4 and the second device 6.

According to a variant, the smart contract might also penalize the first device 4 and not send all the received crypto tokens back.

At step 38, the first device 4 transfers the block of content and the associated metadata to the second device 6.

Then, the monitoring device 8, performing the smart contract, executes, at step 40, a publicly verifiable proof of possession protocol with the second device 6. This protocol comprises sending a challenge to the second device 6. The second device 6 returns then a proof that can be validated by the smart contract using the challenge and the public key of the owner. The challenge is preferably random. It can be based also on the previous block hash in the blockchain. The first or the second implementation of the verification protocol described above in step 36 may also be used here.

If the second device 6 can prove possession, the monitoring device 8 gives the crypto tokens back to the first device 4 and the second device 6.

Preferably, the first device 4 receives a small incentive from the monitoring device 8, e.g. 0.1 tokens. This incentivizes the peers of the network to participate in the transactions and distribution of files.

If the second device 6 cannot prove possession, the protocol fails and the smart contract keeps all the received crypto tokens.

Then, at step 42, the monitoring device 8 logs the result of the block transfer, i.e. success or fail, on the blockchain.

Of course, it is possible for the first device 4 to transfer the file out-of-band, and therefore to bypass the logging mechanism of the present disclosure. That's why the incentive mechanism implemented at step 40 provides incentives to encourage the peers to participate in the protocol as senders.

It is also interesting to note that the second device 6 has no incentive to lie. Indeed, this receiver must download all blocks of the original video file from many senders, which costs a lot of tokens for the receiver. In comparison, the cost of a lying receiver for one sender is neglectable.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, the invention also allows implementing micro-payment services where end-users pay per minute/second of a received video.

The owner or operator of the Video-On-Demand system/platform can rely on the created log to calculate the amount of money that an end-user, i.e. the owner of the gateway implementing a peer, for instance, should pay for the consumed video content. Since the logs are created at the granularity of one block, the payment can be performed at the block level. Blocks are typically small, corresponding to seconds or minutes of video, which therefore allows to implement payment per minute or second of received video. An end-user that did not download an entire movie, for example he stopped before the end of the video because he did not like the video, will not be charged for the entire video, but only for the amount of video that he downloaded. The logs of this disclosure being non-repudiable, they are well adapted for payment/billing. Indeed, neither the end-user nor the VoD operator can question or lie about the data that has been transferred.

## Claims

1. Method of monitoring a transfer of a block of content from a first device (4) to a second device (6) in a peer-to-peer network (2), the method comprising at a monitoring device (8) performing a smart contract in the peer-to-peer network (2):
- receiving (34) a reusable proof of work related to a transfer of the block of content from the first device (4) and from the second device (6);
- receiving (40) a proof of possession of the block of content from the second device (6); and
- logging (42) a result of the data transfer on a blockchain for transfer of blocks of content.

2. Method of claim 1, including, in case the possession is successfully proven, returning the reusable proofs of work to the first device (4) and the second device (6).

3. Method of claim 1 or 2, including, in case the possession is not proven, keeping the reusable proofs of work.

4. Method of any one of claims 1 to 3, wherein the blockchain is maintained by the monitoring device (8) and by the first (4) and second (6) devices.

5. Method of any one of claims 1 to 4, including receiving (36) a proof of possession of the block of content from the first device (4).

6. Method of any one of claims 1 to 5, wherein the block of content is transferred with metadata derived from the block of content using a secret key of an owner of the block of content.

7. Method of any one of claims 1 to 6, wherein the smart contract possesses a public key of the owner.

8. Method of any one of claims 1 to 7, comprising signing (34) the smart contract by the first (4) and second (6) devices.

9. Method of any one of claims 1 to 8, comprising sending an incentive to the first device (4) in case the possession of the block of content by the second (6) device is successfully proven.

10. Monitoring device (8) for monitoring a transfer of a block of content from a first device (4) to a second device (6) in a peer-to-peer network (2), the monitoring device (8) being configured to perform a smart contract, and comprising:
- a receiving module (14) configured to:
- receive a reusable proof of work related to a transfer of the block of content from the first device (4) and from the second device (6);
- receive a proof of possession of the block of content from the second device (6); and
- a logging module (18) configured to log a result of the data transfer on a blockchain for transfer of blocks of content.

11. Monitoring device of claim 10, comprising a transmitting module (16), configured, in case the possession is successfully proven, to return the reusable proofs of work to the first device (4) and the second device (6).

12. Monitoring device of claim 11, wherein the transmitting module (16) is configured to transmit the block of content with metadata derived from a secret key of an owner of the block of content.

13. Monitoring device of claim 11 or 12, wherein the transmitting module (16) is configured to send an incentive to the first device (4) in case the possession of the block of content by the second device (6) is successfully proven.

14. Monitoring device of any one of claims 10 to 13, wherein the receiving module (14) is configured to receive a proof of possession of the block of content from the first device (4).

15. A computer-readable program including computer-executable instructions that enable a computer to perform the monitoring method of any one of claims 1 to 9.
